## Europäisches Patentamt

## European Patent Office

(19) ⑲

## Office européen des brevets

(11) Numéro de publication: **0 228 922**
**B1**

(12) **FASCICULE DE BREVET EUROPÉEN**

(45) Date de publication du fascicule du brevet:
**12.07.89**

(21) Numéro de dépôt: **86402407.0**

(22) Date de dépôt: **28.10.86**

(51) Int. Cl.⁴: **C 10 M 145/14,** C 08 F 220/18 //
(C10M145/14, 143:10),
(C08F220/18, 220:12, 212:06,
C10N30:02)

(54) Compositions de copolymères utilisables comme additifs pour huiles lubrifiantes.

(30) Priorité: **07.11.85 FR 8516636**

(43) Date de publication de la demande:
**15.07.87 Bulletin 87/29**

(45) Mention de la délivrance du brevet:
**12.07.89 Bulletin 89/28**

(84) Etats contractants désignés:
**BE DE GB IT NL**

(56) Documents cité:
**EP-A-0 056 342**
**DE-B-1 122 197**

(73) Titulaire: **INSTITUT FRANCAIS DU PETROLE, 4,
Avenue de Bois- Préau, F-92502 Rueil- Malmaison
(FR)**

(72) Inventeur: **Jarrin, Jacques, 31, rue du Gué, F-92500
Rueil- Malmaison (FR)**
Inventeur: **Robine, Magali, 10, rue Massena,
F-92500 Rueil- Malmaison (FR)**
Inventeur: **Parc, Guy, 27, rue du Château, F-92500
Rueil- Malmaison (FR)**
Inventeur: **Dawans, François, Résidence "la
Feuilleraie" 1, rue Louis Pasteur, F-78380 Bougival
(FR)**

**EP 0 228 922 B1**

## Description

La présente invention est relative à des copolymères préparés par polymérisation radicalaire d'un mélange de styrène et de éthacrylates d'alkyles. Elle concerne également leur utilisation comme additifs de viscosité pour la formulation d'huiles lubrifiantes.

Le secteur technique considéré est celui des polymères ou copolymères utilisés pour améliorer le comportement rhéologique des huiles de lubrification des moteurs dans la gamme des températures le fonctionnement.

On sait qu'une huile formulée doit être la plus visqueuse possible aux températures élevées et la moins visqueuse possible aux faibles températures. Cette caractéristique est mesurée par la sélectivité d'un additif, définie comme le rapport entre la variation relative de viscosité cinématique de l'huile lubrifiante apportée par l'additif à température élevée (par exemple 100°C) et la variation relative de viscosité cinématique à plus basse température (par exemple 30°C).

La sélectivité d'un additif dépend en général de sa composition ou structure et de son pouvoir épaississant donc de sa masse moléculaire. Un pouvoir épaississant élevé permet de formuler une huile avec une quantité plus faible d'additif mais seulement dans la mesure où la résistance au cisaillement mécanique reste compatible avec l'application envisagée. De plus, l'huile formulée doit conserver un bas point d'écoulement. On connaît différents types d'additifs qui répondent à un nombre plus ou moins grand des critères énoncés ci-dessus. Les polyméthacrylates d'alkyle ont un bon comportement en fonction de la température (sélectivité entre -18 et 150°C voisine de 2). Ils abaissent le point d'écoulement de l'huile formulée vers -33°C, mais leur pouvoir épaississant est limité par la résistance au cisaillement mécanique. Des quantités de l'ordre de 4 à 6 % d'additifs sont nécessaires pour ajuster la viscosité de l'huile sans que la formulation soit trop sensible au cisaillement. Cela se traduit par un coût d'usage de ces additifs plus élevé qu'avec d'autres additifs du type copolymère diène-styrène hydrogéné ou copolymère éthylène-propylène, par exemple, qui présentent une meilleure résistance au cisaillement mais une sélectivité nettement plus faible que celle des polyméthacrylates (0,7 à 0,9 mesurée entre -18 et 150°C). De plus, le comportement à froid de ces additifs n'est pas satisfaisant et nécessite l'adjonction d'un additif anti-congelant, qui n'est pas nécessaire avec les additifs de viscosité de type polyméthacrylate.

On connaît également des copolymères tentant d'associer les caractéristiques en solution des différents homopolymères. Ces copolymères sont réalisés par greffage de polyméthacrylate sur un tronc de copolymère oléfinique ou de copolymère diène-styrène et améliorent la stabilité des mélanges des polymères oléfiniques avec les additifs abaisseurs de point de congélation du type polyméthacrylate (voir brevet US-A-4 290 925). En pratique, ces techniques sont délicates à mettre en oeuvre et nécessitent la préparation séparée de polymères et une opération de mélange ou d'émulsification.

De plus, les techniques de greffage radicalaire sont rarement quantitatives et présentent toujours le risque de conduire à des produits partiellement réticulés qui ne seraient plus solubles dans les huiles de base.

On connaît également des copolymères séquencés styrène/méthacrylate d'alkyle préparés par voie ionique (voir brevet US-A-4 136 047), qui présentent une résistance au cisaillement supérieure à celle des polyméthacrylates. Toutefois, la copolymérisation anionique nécessite des précautions qui rendent délicate son utilisation industrielle. En particulier, on doit opérer en l'absence d'oxygène et d'humidité.

On connaît encore des copolymères styrène/méthacrylate d'alkyle préparés par voie radicalaire qui contiennent des teneurs élevées en styrène (35 à 55 poids). Pour conserver une solubilité suffisante, ces produits ont une teneur en méthacrylate d'alkyle en $C_{16}$ à $C_{20}$ au moins égale à 80 % en poids de la teneur totale en méthacrylate. (Voir demande européenne EP-A-0 056 342).

Ils présentent une résistance au cisaillement supérieure à elle des polyméthacrylates et sont compatibles avec les polymères styréniques. Toutefois, ils présentent une sélectivité sensiblement plus faible que celle des polyméthacrylates classiques.

Enfin, on peut signaler le brevet DE-B-1 122 197 qui décrit des additifs pour huiles lubrifiantes consistant en des copolymères formés à partir de 55 à 90 % en poids d'acrylate d'alkyle de $C_{10}$ à $C_{18}$, de 5 à 45 % en poids d'acrylate ou de méthacrylate d'alkyle de $C_1$ à $C_4$ et de 2 à 20 % en poids de styrène (ou de styrène substitué). Du fait de la présence d'acrylates, ces polymères présentent une sensibilité à trop élevée et une stabilité thermique insuffisante.

La présente invention permet de réunir en un seul produit copolymérique des caractéristiques de pouvoir épaississant, de sélectivité et de point de congélation sensiblement égales à celles des polyméthacrylates classiques, avec une résistance accrue aux contraintes de cisaillement et un coût matière plus faible.

Les produits de l'invention peuvent être définis, d'une manière générale, comme consistant essentiellement en des compositions de copolymères présentant de 10 à 35 % en poids de motifs vinyl-aromatiques (styréniques ou alkylstyréniques) et de 90 à 65 % en poids de motifs dérivant de monomères méthacryliques parmi lesquels de 5 à 15 % en poids dérivant d'au moins un méthacrylate d'alkyle linéaire ou ramifié de $C_1$ à $C_4$ de 20 à 55 % en poids dérivant d'au moins un méthacrylate d'alkyle linéaire de $C_8$ à $C_{14}$ et de 15 à 50 % en poids dérivant d'au moins un méthacrylate d'alkyle linéaire de $C_{16}$ à $C_{22}$; Ces proportions pondérales étant exprimées par rapport à l'ensemble des motifs du copolymère.

Dans les compositions de copolymères ainsi définies, la proportion des motifs dérivés de méthacrylates d'alkyle d'au moins 16 atomes de carbone reste inférieure à 70 % en poids de l'ensemble des motifs méthacryliques.

2

La masse moléculaire moyenne en poids des produits de l'invention peut aller par exemple de 1000 000 à 400 000 (telle que déterminée par chromatographie par perméation de gel étalonnée au polyméthacrylate de méthyle). Leur polydispersité est en général inférieure à 5, de préférence de 2,5 à 3.

Les motifs vinylaromatiques et méthacryliques doivent être répartis dans les chaînes copolymériques de façon aussi régulière que possible.

Dans les compositions de copolymères de l'invention les motifs vinylaromatiques dérivent plus particulièrement du styrène ou du vinyltoluène, le styrène étant préféré. Ils représentent de préférence de 15 à 25 % en poids de l'ensemble des motifs du copolymère, l'ensemble de méthacrylates d'alkyle représentant alors de 85 à 75 % en poids.

Le méthacrylate d'alkyle de $C_1$ à $C_4$ est plus particulièrement le méthacrylate de méthyle et représente avantageusement de 5 à 10 % en poids de l'ensemble des motifs du copolymère.

La proportion des motifs dérivant de méthacrylates d'alkyles en $C_8$ - $C_{14}$ peut être alors de 25 à 50 % en poids et celle des motifs dérivant de méthacrylates d'alkyles en $C_{16}$ - $C_{22}$ peut être de 20 à 50 % en poids.

Les compositions de copolymères de l'invention peuvent être préparées par copolymérisation radicalaire, à partir des proportions appropriées des monomères.

Pour introduire les motifs méthacrylates d'alkyles dont les chaînes alkyles renferment respectivement de 8 à 14 et de 16 à 22 atomes de carbone, on peut utiliser chacun des monomères seul, ou des mélanges de divers monomères, comme par exemple une coupe commerciale de méthacrylates d'alkyles de $C_8$ à $C_{18}$ et une coupe commerciale de méthacrylates d'alkyles de $C_{14}$ à $C_{22}$.

La copolymérisation est amorcée par un amorceur radicalaire conventionnel tel que ceux couramment utilisés dans ce type de polymérisation (composé azoïque ou peroxydique).

La température de copolymérisation est comprise entre 90 et 130°C, le solvant pouvant être par exemple une huile minérale (100 ou 200 N) utilisée en une proportion de 20 à 50 % en poids par rapport au milieu réactionnel pris dans son ensemble.

Les compositions de copolymères selon l'invention sont utilisées comme additif de viscosité pour les huiles lubrifiantes, minérales ou synthétiques. Elles sont en général ajoutées en des proportions allant de 2 à 10 % en poids par rapport à l'huile lubrifiante.

Ces compositions présentent l'avantage d'un meilleur compromis entre les divers effets demandés à un additif de viscosité solubilité, pouvoir épaississant, sélectivité, résistance au cisaillement et point d'écoulement.

Les exemples suivants illustrent l'invention, mais ne doivent en aucune manière être considérés comme limitatifs. Les exemples 1 à 5, 6, 10, 12 et 13 sont donnés à titre de comparaison.

## Exemples 1 à 10

La préparation des produits considérés dans ces exemples est décrite ci-après par référence à l'exemple 8.

Dans un réacteur muni d'une prise de vide, d'une circulation de gaz neutre et d'une agitation mécanique, on introduit le mélange de l'huile, des monomères et de l'amorceur dans les proportions suivantes:

| Solvant | = | Huile 100 N | | 29,6 % poids |
| | | Styrène | 20 % poids | |
| Mélange | | Méthacrylate de méthyle (MAM) | 8 % poids | 70 % poids |
| des | | Méthacrylate de lauryle | 50 % poids | |
| monomères | | Méthacrylate de stéaryle | 22 % poids | |
| Amorceur | = | Peroxyde de benzoyle | | 0,4 % poids |

Par méthacrylate de lauryle et méthacrylate de stéaryle, ont entend des coupes de méthacrylates d'alkyles respectivement de 8 à 18 et de 14 à 22 atomes de carbone. On donne ci-après la composition des coupes utilisées dans les exemples.

Méthacrylate de lauryle (en abrégé MALAU):

13 % ($\pm$ 2 %) de méthacrylate d'alkyle en $C_8$
16 % ($\pm$ 2 %) de méthacrylate d'alkyle en $C_{10}$
29 % ($\pm$ 2 %) de méthacrylate d'alkyle en $C_{12}$
21 % ($\pm$ 2 %) de méthacrylate d'alkyle en $C_{14}$
14 % ($\pm$ 2 %) de méthacrylate d'alkyle en $C_{16}$
7 % ($\pm$ 2 %) de méthacrylate d'alkyle en $C_{18}$

Méthacrylate de stéaryle (en abrégé MAS):

2 % ($\pm$ 2 %) de méthacrylate d'alkyle en $C_{14}$
51 % ($\pm$ 2 %) de méthacrylate d'alkyle en $C_{16}$

30 % ($\pm$ 2 %) de méthacrylate d'alkyle en $C_{18}$
14 % ($\pm$ 2 %) de méthacrylate d'alkyle en $C_{20}$
3 % ($\pm$ 2 %) de méthacrylate d'alkyle en $C_{22}$

Le réacteur et les produits sont soigneusement dégazés par une succession (4 ou 5) de mises sous pression réduite et de mises sous légère pression de gaz neutre. Puis le réacteur est porté à 100°C et maintenu à cette température pendant 5 heures. Après ce délai, la température est portée à 130°C pendant 2h pour polymériser les résidus éventuels de monomères et achever la décomposition de l'amorceur. La viscosité du mélange final est ajustée en ajoutant environ 40 % poids par rapport au mélange d'huile 100 N avant de sortir la solution d'additif du réacteur par coulage.

Les produits des autres exemples sont préparés selon le même mode opératoire, avec des proportions différentes des réactifs de départ (telles qu'indiquées dans le tableau 1).

On a également indiqué dans le tableau 1 certaines caractéristiques des produits obtenus ainsi que plusieurs propriétés en tant qu'additifs dans l'huile.

Les caractéristiques de masse moléculaire figurant au tableau 1 ont été déterminées par chromatographie par perméation de gel, étalonnée avec du polyméthacrylate de méthyle (PMMA) le pouvoir épaississant (PE) correspond à la quantité de polymère à introduire dans l'huile 200 N pour atteindre une viscosité de 15 mm²/s à 100°C.

La sélectivité est déterminée par la relation:

$$S \frac{100}{30} = [\frac{\eta - \eta_0}{\eta_0}]_{100°C} \quad X \quad [\frac{\eta_0}{\eta - \eta_0}]_{30°C}$$

avec
$\eta$   viscosité cinématique de l'huile polymère
$\eta_0$   viscosité cinématique de l'huile

La perte de viscosité au cisaillement ($\Delta \eta$ %) est déterminée par le test ORBAHN selon la norme DIN 51382 après 30 cycles.

Le point d'écoulement est déterminé selon la norme AFNOR T 60 105, avec une concentration en polymère telle que l'on atteigne une viscosité cinématique de 15 mm²/s à 100°C dans l'huile 200 N.

**Tableau 1**

| Exemple | Proportion des monomères (% poids) | | | | Masse moléculaire | | | Propriétés dans l'huile | | | |
|---|---|---|---|---|---|---|---|---|---|---|---|
| | Styrène | MAM | MALAU $(C_8-C_{18})$ | MAS $(C_{14}-C_{22})$ | $\overline{M}_n$ | $\overline{M}_o$ (étalonnage PMMA) | $I_p$ | PE (%) | $S \frac{100}{30}$ | $\Delta \eta$ (%) | Point d'écoul. (°C) |
| 1* | 0 | 0 | 70 | 30 | - | - | - | 4,0 | 1,32 | -30 | -33 |
| 2* | 10 | 0 | 63 | 27 | 87750 | 372575 | 4,24 | 3,85 | 1,26 | -22 | -33 |
| 3* | 20 | 0 | 56 | 24 | 69170 | 216000 | 3,12 | 5,20 | 1,23 | -11 | -33 |
| 4* | 30 | 0 | 49 | 21 | 65100 | 180000 | 2,72 | 5,30 | 1,18 | - 8 | -24 |
| 5* | 40 | 0 | 42 | 18 | 61600 | 162000 | 2,62 | 5,65 | 1,11 | - 6 | -15 |
| 6* | 0 | 8 | 64 | 28 | - | - | - | 4,5 | 1,37 | -27 | -33 |
| 7 | 10 | 8 | 57 | 25 | 71000 | 287480 | 4,04 | 4,45 | 1,43 | -20 | -33 |
| 8 | 20 | 8 | 50 | 22 | 67600 | 207000 | 3,06 | 5,25 | 1,38 | - 9 | -27 |
| 9 | 30 | 8 | 43 | 19 | 71500 | 189000 | 2,62 | 5,60 | 1,32 | - 8 | -15 |
| 10* | 40 | 8 | 36 | 16 | 54000 | 141000 | 2,54 | Insoluble à température ambiante | | | |

\* Exemples comparatifs
$\overline{M}_n$ : masse moléculaire moyenne en nombre
$\overline{M}_p$ : masse moléculaire moyenne en poids
$I_p$ : (= $\overline{M}_p/\overline{M}_n$) : poly/dispersité

Selon les résultats figurant au tableau 1, il apparaît que la teneur en styrène ne doit pas être aussi élevée que 40 % en poids pour conserver une solubilité et une tenue à froid satisfaisante de l'huile 200H formulée. Une teneur en styrène comprise entre 15 et 25 % en poids semble devoir être preférée pour conserver un point d'écoulement inférieur à -27°C.

La sélectivité des additifs décrits dépend de la teneur en styrène et de la teneur en méthacrylate de méthyle. Toutefois, pour une même teneur en styrène, l'introduction de 8 % poids de MAM environ permet d'atteindre des sélectivités de l'ordre de grandeur de celles constatées avec les polyméthacrylates conventionnels préparés en l'absence de styrène.

La sensibilité au cisaillement mécanique déterminée par la chute de viscosité après 30 cycles lors d'un test dans l'injecteur ORBAHN selon la norme DIN 51 382 diminue lorsque la teneur en styrène augmente.

Le meilleur compromis entre l'ensemble de ces caractéristiques semble être fourni par un produit tel que celui de l'exemple 8 figurant au tableau 1.

**Exemples 11 et 12** (l'exemple 12 est un exemple comparatif)

A partir de la composition du copolymère de l'exemple 8, on a fait croître les proportions de méthacrylate de stéaryle selon les valeurs indiquées dans le tableau 2 ci-après.

Le mode de préparation était le même que celui décrit précédemment pour le copolymère de l'exemple 8.

On a déterminé le pouvoir épaississant de chacun des copolymères des exemples 11 et 12 et, à la concentration en copolymère ainsi fixée, on a déterminé la sélectivité entre 30 et 100°C, ainsi que le point d'écoulement de l'huile additivée.

Les résultats obtenus sont indiqués dans le tableau 2.

Si l'on considère ces résultats et ceux obtenus pour le copolymère de l'exemple 8, on constate que l'accroissement de la proportion de méthacrylates d'alkyles à longue chaîne par rapport à la proportion de méthacrylates d'alkyles à longueur de chaîne moyenne apporte un affaiblissement de la sélectivité et une réduction importante de l'abaissement du point d'écoulement.

**Exemple 13** (comparatif)

On a préparé un copolymère selon le même mode opératoire que pour l'exemple 8, en utilisant les proportions de monomères indiquées dans le tableau 2. La proportion de styrène a été accrue jusqu'à 40 % en poids et la proportion de méthacrylate d'alkyles à longue chaîne a été portée à 80 % en poids par rapport à l'ensemble des méthacrylates d'alkyle mis en jeu.

On a également déterminé le pouvoir épaississant de ce copolymère et, à la concentration ainsi obtenue, la sélectivité ainsi que le point d'écoulement de l'huile. Les résultats sont indiqués au tableau 2. On constate que le copolymère ne convient pas comme additif, essentiellement en raison de son effet défavorable sur le point d'écoulement.

**Tableau 2**

| Exemple | Proportion des monomères (% poids) | | | | Propriétés dans l'huile | | |
|---|---|---|---|---|---|---|---|
| | Styrène | MAM | MALAU $(C_8-C_{18})$ | MAS $(C_{14}-C_{22})$ | PE (%) | $\dfrac{100 \cdot S}{30}$ | Point d'écoulement (°C) |
| 11 | 20 | 8 | 32 | 40 | 4,0 | 1,20 | -30 |
| 12* | 20 | 8 | 10 | 62 | 5,8 | 0,99 | -18 |
| 13* | 40 | 5 | 7 | 48 | 4,4 | 1,40 | -18 |

* exemples comparatifs

**Revendications**

1. Composition de copolymère, utilisable comme additif de viscosité pour huiles lubrifiantes, caractérisée en ce qu'elle comprend:
- de 10 à 35 % en poids de motifs dérivant d'au moins un monomère vinylaromatique;
- de 90 à 65 % en poids de motifs dérivant de monomères méthacryliques dont
  . de 5 à 15 % en poids dérivant d'au moins un méthacrylate d'alkyle linéaire ou ramifié de $C_1$ à $C_4$;
  . de 20 à 55 % en poids dérivant d'au moins un méthacrylate d'alkyle linéaire de $C_8$ à $C_{14}$; et
  . de 15 à 50 % en poids dérivant d'au moins un méthacrylate d'alkyle linéaire de $C_{16}$ à $C_{22}$;
  ces proportions pondérales étant exprimées par rapport à l'ensemble des motifs constituant le copolymère.

2. Composition de copolymère selon la revendication 1, caractérisée en ce qu'elle présente une masse moléculaire moyenne de poids de 100 000 à 400 000.

3. Composition de copolymère selon l'une des revendications 1 et 2, caractérisée en ce qu'elle présente une polydispersité inférieure à 5.

4. Composition de copolymère selon l'une des revendications 1 à 3, caractérisée en ce que ledit monomère vinylaromatique est le styrène et les motifs qui en dérivent représentent de 15 à 25 % en poids des motifs constituant le copolymère.

5. Composition de copolymère selon la revendication 4, caractérisée en ce que:
. les motifs dérivant d'au moins un méthacrylate d'alkyle de $C_1$ à $C_4$ représentent de 5 à 10 % en poids;
. les motifs dérivant d'au moins un méthacrylate d'alkyle de $C_8$ à $C_{14}$ représentent de 25 à 50 % en poids; et
. les motifs dérivant d'au moins un méthacrylate d'alkyle de $C_{16}$ à $C_{22}$ représentent de 20 à 50 % en poids de l'ensemble des motifs constituant le copolymère.

6. Composition de copolymère selon l'une des revendications 1 à 5, caractérisée en ce que ledit méthacrylate d'alkyle de $C_1$ à $C_4$ est le méthacrylate de méthyle.

7. Composition de copolymère selon l'une des revendications 1 à 6, caractérisée en ce que le méthacrylate d'alkyle de $C_8$ à $C_{14}$ et le méthacrylate d'alkyle de $C_{16}$ à $C_{22}$ proviennent d'une coupe commerciale contenant une proportion prépondérante de méthacrylate de lauryle et d'une coupe commerciale contenant une proportion prépondérante de méthacrylate de stéaryle.

8. Procédé de préparation d'une composition de copolymère selon l'une des revendications 1 à 7, caractérisé en ce que l'on fait réagir dans des conditions de copolymérisation radicalaire, des proportions convenables des monomères.

9. Composition lubrifiante caractérisée en ce qu'elle comprend une proportion majeure d'huile lubrifiante et une proportion mineure, suffisante pour en améliorer les propriétés de viscosité, d'au moins une composition de copolymère selon l'une des revendications 1 à 7.

10. Composition lubrifiante selon la revendication 9, caractérisée en ce que la proportion de composition de copolymère est de 2 à 10 % en poids par rapport à l'huile lubrifiante.

**Patentansprüche**

1. Copolymerzusammensetzung, die als Viskositätszusatz für Schmieröle verwendbar ist, dadurch gekennzeichnet, daß sie enthält:
- 10 bis 35 Gew.-% an Einheiten, die von zumindest einem vinylaromatischen Monomeren stammen;
- 90 bis 65 Gew.-% an Einheiten, die von Methacrylmonomeren stammen, wobei
. 5 bis 15 Gew.-% von zumindest einem linearen oder verzweigten $C_1$ bis $C_4$ Alkylmethacrylat stammen;
. 20 bis 55 Gew.-% von zumindest einem linearen $C_8$ bis $C_{14}$ Alkylmethacrylat stammen; und
. 15 bis 50 Gew.-% von zumindest einem linearen $C_{16}$ bis $C_{22}$ Alkylmethacrylat stammen; und
wobei diese Gewichtsanteile ausgedrückt sind bezogen auf die Gesamtheit der Einheiten, welche das Copolymere ausmachen.

2. Copolymerzusammensetzung nach Anspruch 1, dadurch gekennzeichnet, daß sie ein Gewichtsmittel der Molekularmasse von 100 000 bis 400 000 aufweist.

3. Copolymerzusammensetzung nach einem der Ansprüche 1 oder 2, dadurch gekennzeichnet, daß sie eine Polydispersität unterhalb 5 zeigt.

4. Copolymerzusammensetzung nach einem der Ansprüche 1 bis 3, dadurch gekenzeichnet, daß das vinylaromatische Monomere Styrol ist und die Einheiten, die davon stammen, bis 25 Gew.-% der Einheiten darstellen, welche das Copolymere ausmachen.

5. Copolymerzusammensetzung nach Anspruch 4, dadurch gekennzeichnet, daß:
. die Einheiten, die von zumindest einem $C_1$ bis $C_4$ Alkylmethacrylat stammen, 5 bis 10 Gew.-% ausmachen;
. die Einheiten, die von zumindest einem $C_8$ bis $C_{14}$ Alkylmethacrylat stammen, 25 bis 50 Gew.-% ausmachen; und
. die Einheiten, die von zumindest einem $C_{16}$ bis $C_{22}$ Alkylmethacrylat stammen, 20 bis 50 Gew.-% der Gesamtheit der Einheiten ausmachen, welche das Copolymere darstellen.

6. Copolymerzusammensetzung nach einem der Ansprüche 1 bis 5, dadurch gekennzeichnet, daß das $C_1$ bis $C_4$ Alkylmethacrylat Methylmethacrylat ist.

7. Copolymerzusammensetzung nach einem der Ansprüche 1 bis 6, dadurch gekennzeichnet, daß das $C_8$ bis $C_{14}$ Alkylmethacrylat und das $C_{16}$ bis $C_{22}$ Alkylmethacrylat von einer handelsüblichen Fraktion stammen, welche einen überwiegenden Anteil an Laurylmethacrylat enthält und von einer handelsüblichen Fraktion, die einen überwiegenden Anteil Stearylmethacrylat enthält.

8. Verfahren zur Herstellung einer Copolymerzusammensetzung nach einem der Ansprüche 1 bis 7, dadurch gekennzeichnet, daß man unter Bedingungen der radikalischen Copolymerisation geeignete Mengenanteile der Monomeren umsetzt.

9. Schmiermittelzusammensetzung, dadurch gekennzeichnet, daß sie einen größeren Anteil an Schmieröl und einen kleineren Anteil, der ausreicht, um die Viskositätseigenschaften zu verbessern, an zumindest einer Copolymerzusammensetzung nach einem der Ansprüche 1 bis 7 aufweist.

10. Schmiermittelzusammensetzung nach Anspruch 9, dadurch gekennzeichnet, daß der Mengenanteil an Copolymerzusammensetzung 2 bis 10 Gew.-%, bezogen auf Schmieröl beträgt.

## Claims

1. A copolymer composition, usable as a viscosity additive for lubricating oils, characterized in that it comprises:
- 10 to 35 % by weight of units derived from at least one vinyl aromatic monomer;
- 90 to 65 % by weight of units derived from methacylic monomers of which:
   . 5 to 15 % by weight are derived from at least one linear or branched $C_1$ to $C_4$ alkyl methacrylate;

   . 20 to 55 % by weight are derived from at least one linear $C_8$ to $C_{14}$ alkyl methacrylate;
   . 15 to 50 % by weight are derived from at least one linear $C_{16}$ to $C_{22}$ alkyl methacrylate;
   these proportions by weight being expressed with respect to the total of the units constituting the copolymer.

2. A copolymer composition according to claim 1, characterized in that it has a weight average molecular weight of 100 000 to 400 000.

3. A copolymer composition according to anyone of claims 1 and 2, characterized in that it has a polydispersity index of less than 5.

4. A copolymer composition according to anyone of claims 1 to 3, characterized in that said vinylaromatic monomer is styrene and the units derived from it represent 15 to 25 % by weight of the total units constituting the copolymer.

5. A copolymer composition according to claim 4, characterized in that:
   . the units derived from at least one $C_1$ to $C_4$ alkyl methacrylate represent 5 to 10 % by weight;
   . the units derived from at least one $C_8$ to $C_{14}$ alkyl methacrylate represent 25 to 50 % by weight; and
   . the units derived from at least one $C_{16}$ to $C_{22}$ alkyl methacrylate represent 20 to 50 % by weight of the total units constituting the copolymer.

6. A copolymer composition according to anyone of claims 1 to 5, characterized in that said $C_1$ to $C_4$ alkyl methacrylate is methyl methacrylate.

7. A copolymer composition according to anyone of claims 1 to 6, characterized in that the $C_8$ to $C_{14}$ alkyl methacrylate and the $C_{16}$ to $C_{22}$ alkyl methacrylate are derived from a commercial cut containing a preponderant proportion of lauryl methacrylate and a commercial cut containing a preponderant proportion of stearyl methacrylate.

8. A method for the preparation of a copolymer composition according to anyone of claims 1 to 7, characterized in that suitable proportions of the monomers are reacted under free-radical copolymerization conditions.

9. A lubricating composition characterized in that it comprises a major proportion of lubricating oil and a minor proportion, sufficient to improve the viscosity properties, of at least one copolymer composition according to anyone of claims 1 to 7.

10. A lubricating composition according to claim 9, characterized in that the proportion of the copolymer composition is 2 to 10 % by weight with respect to the lubricating oil.